# EUROPÄISCHE PATENTANMELDUNG

(11) **EP 3 122 036 A1**
(43) Veröffentlichungstag der Anmeldung: **25.01.2017**
(21) Anmeldenummer: 16167340.5
(22) Anmeldetag: 27.04.2016
(51) Int. Cl.: H04N 5/64

(54) **VORRICHTUNG ZUR HALTERUNG EINES MOBILEN ELEKTRONISCHEN GERÄTES MIT BILDSCHIRM**

(30) Priorität: 24.07.2015 DE 202015103892 U
(71) Anmelder: Theilinger, Philipp, 90425 Nürnberg (DE)
(72) Erfinder: Theilinger, Philipp, 90425 Nürnberg (DE)
(74) Vertreter: Lösch, Christoph Ludwig Klaus

(57) **Zusammenfassung**

Die Erfindung betrifft eine Vorrichtung zur Halterung eines mobilen elektronischen Gerätes mit Bildschirm, welche einen hohlquaderförmigen Grundkörper (1, 101, 201) mit einer Oberseite (2, 102) und Seitenwänden (3, 4, 104, 203, 204); eine rechteckige Öffnung (5) auf der Oberseite (2, 102) des Grundkörpers (1, 101), deren Öffnungsquerschnitt auf die Bildschirmgröße des elektronischen Gerätes anpassbar ist; und eine Aussparung (6, 106) im Bereich der Unterkante (7, 107) einer der Seitenwände (4, 104, 204) aufweist, welche derart dimensioniert ist, dass eine Halspartie eines Benutzers umfasst werden kann.

## Beschreibung

Die Erfindung betrifft eine Vorrichtung zur Halterung eines mobilen elektronischen Gerätes, das einen Bildschirm aufweist. Mobile elektronische Geräte (insbesondere Mobiltelefone, Smartphones, Tablets) sind allgemein bekannt und erfreuen sich großer Beliebtheit. Es besteht jedoch unter Umständen das Bedürfnis, bei der Bedienung des Gerätes nicht durch Umgebungseinflüsse gestört zu werden. Will der Benutzer des mobilen elektronischen Gerätes beispielsweise einen Videofilm o.ä. betrachten, so möchte er dies beispielsweise möglichst ohne störende Geräusch- und Lichteinflüsse tun. Zugleich kann ein langanhaltendes Halten des elektronischen Gerätes in der Hand zu Verspannungen und zu einer verkrampften Körperhaltung führen.

Der Erfindung liegt die Aufgabe zugrunde, eine Vorrichtung zur Halterung eines mobilen elektronischen Gerätes anzubieten, welches eine zuverlässige Halterung des elektronischen Gerätes gewährleistet und zugleich störende Umgebungseinflüsse (wie z.B. Geräusche und Lichteinfall) minimiert.

Die Aufgabe wird durch eine Vorrichtung mit den Merkmalen des Anspruchs 1 gelöst. Vorteilhafte Ausführungsformen sind in den Unteransprüchen beschrieben.

Erfindungsgemäß besitzt die Vorrichtung zur Halterung eines mobilen elektronischen Gerätes mit Bildschirm einen hohlquaderförmigen Grundkörper mit einer Oberseite und Seitenwänden, eine rechteckige Öffnung auf der Oberseite des Grundkörpers, deren Öffnungsquerschnitt auf die Bildschirmgröße des elektronischen Gerätes anpassbar ist; und eine Aussparung im Bereich der Unterkante einer der Seitenwände, welche derart dimensioniert ist, dass eine Halspartie eines Benutzers umfasst werden kann.

Der Benutzer kann das mobile elektronische Gerät auf die rechteckige Öffnung auf der Oberseite des Grundkörpers positionieren (mit der Bildschirmseite in Richtung Inneren des Grundkörpers) und sich anschließend mit seinem Kopf in den Grundkörper begeben. Dort kann er dann das mobile Geräte bedienen bzw. beispielsweise den Videofilm ansehen, ohne das mobile Gerät in der Hand halten zu müssen. Der Benutzer kann sich vielmehr entspannt hinlegen und den Videofilm genießen. Außerdem schützt der Grundkörper den Benutzer vor Geräuschen und Lichteinfall. Insgesamt werden damit der Bedienkomfort des elektronischen Gerätes verbessert und negative Umgebungseinflüsse abgeschirmt.

In einer vorteilhaften Ausführungsform besteht der Grundkörper aus Pappe, Karton oder Kartonage und ist zusammenfaltbar oder zusammenklappbar ausgebildet. Auf diese Weise kann der Grundkörper platzsparend aufbewahrt und transportiert werden. Zugleich besitzt er ein relativ geringes Gewicht und kann kostengünstig hergestellt werden. Obwohl eine Ausführung des Grundkörpers aus Pappe, Karton oder Kartonage vorteilhaft ist, ist gegebenenfalls auch die Herstellung des Grundkörpers aus anderen Materialien möglich.

In einer weiteren vorteilhaften Ausführungsform weist der Grundkörper Belüftungsöffnungen auf. Diese Belüftungsöffnungen können insbesondere auf einer oder mehreren der Seitenwände ausgebildet sein. Die Belüftungsöffnungen sorgen für eine Belüftung des Inneren des Grundkörpers mit Umgebungsluft. Auf diese Weise kann das Klima im Inneren des Grundkörpers reguliert werden. In bevorzugter Weise können die Belüftungsöffnungen als perforierte oder vorgestanzte Löcher im Grundkörper ausgebildet sein. Je nach Bedarf können dann einzelne oder sämtliche Löcher durchstanzt werden und auf diese Weise für eine Belüftung sorgen.

In einer weiteren vorteilhaften Ausführungsform weist die Öffnung auf der Oberseite des Grundkörpers eine Mehrzahl von ineinander liegenden perforierten oder vorgestanzten Rechtecken auf. Durch Heraustrennen eines oder mehrere der Rechtecke kann die Öffnung auf die Größe des Bildschirms des elektronischen Gerätes angepasst werden, sodass für den Benutzer der komplette Bildschirminhalt sichtbar ist.

In einer weiteren vorteilhaften Ausführungsform weist die Vorrichtung zur Halterung eines mobilen elektronischen Gerätes zusätzlich zum Grundkörper eine Abdeckplatte auf, die eine Mehrzahl von ineinander liegenden perforierten oder vorgestanzten Rechtecken aufweist. In bevorzugter Weise ist diese Abdeckplatte aus Pappe, Karton oder Kartonage gefertigt. Die äußeren Abmessungen der Abdeckplatte sind hierbei größer ausgebildet als die Abmessungen der Öffnung auf der Oberseite des Grundkörpers, sodass die Abdeckplatte auf die Öffnung gelegt werden kann. Durch Heraustrennen eines oder mehrere der Rechtecke aus der Abdeckplatte kann nun auf der Abdeckplatte eine Öffnung erzeugt werden, die auf die Größe des Bildschirms des elektronischen Gerätes angepasst ist. Auf diese Weise ist es möglich die Vorrichtung für ein erstes mobiles elektronisches Gerät mit einem relativ großen Bildschirm zu verwenden, in dem das erste mobile elektronische Gerät direkt auf die Öffnung auf der Oberseite des Grundkörpers gelegt wird. Zugleich ist es aber möglich, die Vorrichtung für weitere mobile elektronische Geräte mit kleineren Bildschirmen zu verwenden, indem eine entsprechend ausgestanzte Abdeckplatte auf die Öffnung des Grundkörpers gelegt wird, sodass nur noch die im Vergleich zur Öffnung des Grundkörpers kleinere Öffnung der Abdeckplatte verbleibt.

Die Aussparung im Bereich der Unterkante einer der Seitenwände ist allgemein derart dimensioniert, dass eine Halspartie eines Benutzers umfasst werden kann, sodass der Grundkörper eine möglichst geschlossene Hülle bildet, um Umgebungseinflüsse möglichst abschirmen zu können. Es ist jedoch auch möglich, die Aussparung derart dimensioniert ist, dass zwei Halspartien von zwei verschiedenen Benutzern gleichzeitig umfasst werden können. Dies ermöglicht eine gleichzeitige Nutzung der Vorrichtung durch zwei Benutzer.

Zur sicheren Lagerung des elektronischen Gerätes ist es möglich, auf der Oberseite des Grundkörpers und/oder auf der Abdeckplatte Fixierelemente zur Fixierung des elektronischen Gerätes anzuordnen. Dadurch wird vermieden, dass das elektronische Gerät versehentlich von der Oberseite des Grundkörpers herabrutscht. Ist der Bildschirm des elektronischen Gerätes als berührungssensitiver Bildschirm (Touchscreen) ausgebildet, so wird zusätzlich die Bedienbarkeit des elektronischen Gerätes erleichtert, da die Fixierelemente ein versehentliches Abheben oder Verrutschen des elektronischen Gerätes beim Berühren des Bildschirms verhindern.

Zusätzlich oder alternativ zu den Fixierelementen können auf der äußeren Oberfläche des Grundkörpers Kabelhalterungen angeordnet sein. In diese Kabelhalterungen kann eine Kabelverbindung (z.B. Ladekabel des elektronischen Gerätes, drahtgebundene Verbindung zu einem Datennetzwerk, z.B. LAN-Kabel) des elektronischen Gerätes eingebracht und auf diese Weise sicher und zuverlässig gehalten werden.

Sowohl die Fixierelemente als auch die Kabelhalterungen können hierbei als perforierte oder vorgestanzte ausklappbare Laschen auf dem Grundkörper ausgebildet sein und je nach Bedarf herausgeklappt - und bei Nichtgebrauch wieder eingeklappt - werden.

In einer weiteren vorteilhaften Ausführungsform ist auf einer Seitenwand des Grundkörpers eine Klappe zum Hochklappen mindestens eines Teilbereichs der Seitenwand ausgebildet. In bevorzugter Weise ist diese Klappe hierbei ebenfalls perforiert oder vorgestanzt und befindet sich auf derjenigen Seitenwand, welche mit der Aussparung versehen ist. Durch das Hochklappen kann der Benutzer auf einfach Weise in das Innere des Grundkörpers gelangen. Insbesondere braucht der Benutzer nicht die komplette Vorrichtung anheben, sondern muss lediglich seinen Kopf durch die geöffnete Klappe stecken. Anschließend kann die Klappe wieder geschlossen werden.

In einer weiteren vorteilhaften Ausführungsform weisen die Seitenwände in ihrem unteren Bereich eine umlaufende perforierte oder vorgestanzte Kante auf. Diese Kante kann bei Bedarf abgetrennt oder umgeknickt werden und auf diese Weise die Höhe des Grundkörpers an die Bedürfnisse des Benutzers angepasst werden. Diese Höhenverstellbarkeit erhöht damit die Variabilität der Vorrichtung.

Die Erfindung ist anhand von Ausführungsbeispielen in den Zeichnungsfiguren weiter erläutert, wobei gleiche Bezugszeichen gleiche bzw. gleichwirkende Komponenten bezeichnen. Es zeigen:
- Fig. 1: eine perspektivische Ansicht eines Grundkörpers einer Vorrichtung zur Halterung eines mobilen elektronischen Gerätes mit Bildschirm;
- Fig. 2: eine vergrößerte Ansicht der rechteckigen Öffnung auf der Oberseite des Grundkörpers aus Fig. 1;
- Fig. 3: eine perspektivische Ansicht einer Abdeckplatte;
- Fig. 4: eine perspektivische Ansicht eines weiteren Grundkörpers einer Vorrichtung zur Halterung eines mobilen elektronischen Gerätes; und
- Fig. 5: eine perspektivische Ansicht eines weiteren Grundkörpers einer Vorrichtung zur Halterung eines mobilen elektronischen Gerätes.

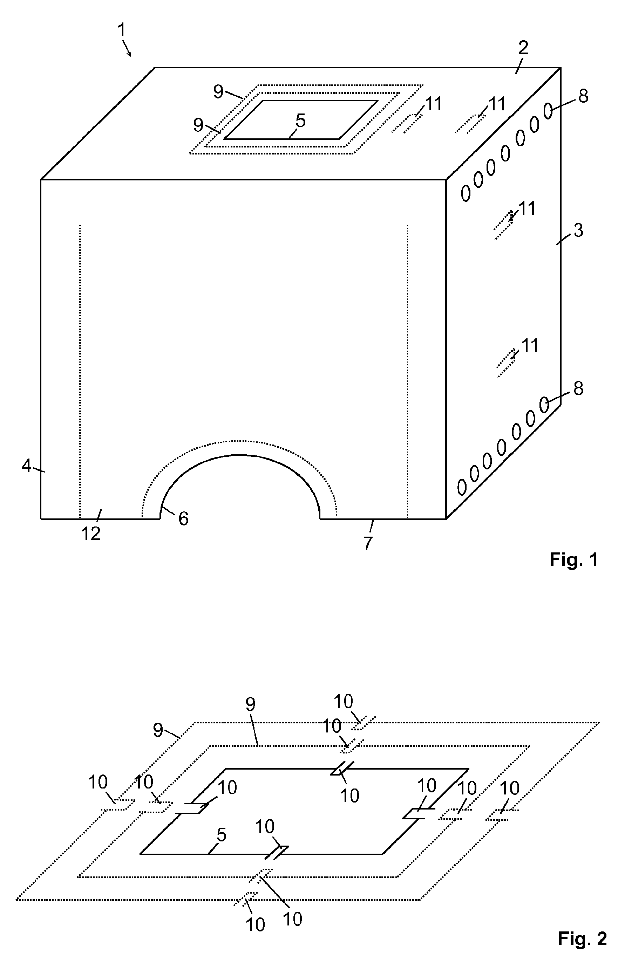

Fig. 1 zeigt einen Grundkörper 1 einer Vorrichtung zur Halterung eines mobilen elektronischen Gerätes mit Bildschirm. Der Grundkörper 1 ist hohlquaderförmig ausgebildet und weist eine Oberseite 2 sowie insgesamt vier Seitenwände, von denen die beiden in Fig. 1 sichtbaren Seitenwände mit den Bezugszeichen 3 bzw. 4 gekennzeichnet sind. Der Grundkörper 1 ist aus Karton oder Kartonage gefertigt und ist zusammenfaltbar ausgeführt.

Auf der Oberseite 2 ist eine rechteckige Öffnung 5 und auf der Seitenwand 4 ist eine im Wesentlichen halbovalförmige Aussparung 6 ausgebildet. Die Aussparung 6 ist hierbei derart dimensioniert, dass eine Halspartie eines Benutzers umfasst werden kann, und ist im Bereich der Unterkante 7 der Seitenwand 4 ausgebildet. Die Aussparung 6 ist mit einem vorgestanzten Rand versehen. Durch Abtrennen dieses in Fig. 1 gepunktete dargestellten Randes kann die Aussparung 6 vergrößert werden und auf diese Weise an die Größe der Halspartie des Benutzers angepasst werden.

Auf der Seitenwand 3 ist eine Mehrzahl von Belüftungsöffnungen 8 ausgebildet. Genauer sind die Belüftungsöffnungen 8 zweireihig angeordnet, nämlich in einer ersten im unteren Bereich der Seitenwand 3 angeordneten Reihe und in einer zweiten im oberen Bereich der Seitenwand 3 angeordneten Reihe.

Die Öffnung 5 auf der Oberseite 2 ist in Fig. 2 vergrößert dargestellt. Die Öffnung 5 besteht aus dem eigentlichen Durchgangsloch sowie insgesamt zwei vorgestanzten Rechtecken 9, die dieses Durchgangsloch umgeben. Die vorgestanzten Rechtecke 9 sind in Fig. 1 und Fig. 2 gepunktet dargestellt. Ferner sind mehrere Laschen 10 ausgebildet, die als Fixierelemente für das elektronische Gerät dienen. Die Laschen 10 sind vorgestanzt und können je nach Bedarf aus- und eingeklappt werden.

Auf der Oberseite 2 und der Seitenwand 3 sind jeweils zwei Laschen 11 ausgebildet, die als Kabelhalterung dienen. Die Laschen 11 sind ebenfalls vorgestanzt und können je nach Bedarf aus- und eingeklappt werden.

Des Weiteren ist auf der Seitenwand 4 eine Klappe 12 vorgestanzt (die Stanzlinien sind in Fig. 1 wieder gepunktet dargestellt). Die Klappe 12 kann bei Bedarf nach oben aufgeklappt werden.

Möchte der Benutzer nun einen Videofilm o.ä. auf einem mobilen elektronischen Gerät (insbesondere Mobiltelefon, Smartphone, Tablett) betrachten, so kann er das in den Figuren nicht dargestellte Gerät mit der Bildschirmseite in Richtung Inneres des Grundkörpers 1 auf die Öffnung 5 legen. Bei Bedarf kann das Gerät durch die Laschen 10 fixieren und gegebenenfalls vorhandenen Kabelverbindungen des Gerätes in die Laschen 11 zur sicheren Kabelführung einklemmen. Anschließend kann der Benutzer die Klappe 12 hochklappen und seinen Kopf in das Innere des Grundkörpers 1 stecken und sich auf den Rücken legen. Dann kann der Benutzer die Klappe 12 wieder schließen. Die Aussparung 6 umschließt dann seine Halspartie. Nun kann der Benutzer den Videofilm entspannt betrachten, ohne das Gerät in der Hand halten zu müssen. Außerdem werden störende Umgebungseinflüsse, wie Geräusche oder Lichteinfall gedämpft. Für eine ausreichende Belüftung sorgen die Belüftungsöffnungen 8.

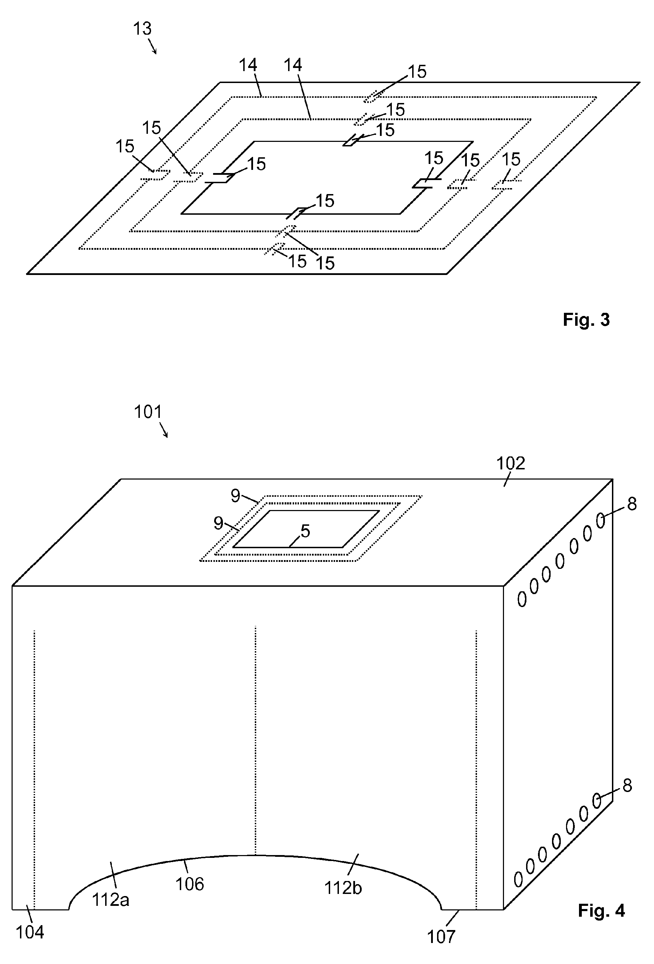

Fig. 3 zeigt eine Abdeckplatte 13. Die Abdeckplatte 13 ist ebenfalls aus Karton oder Kartonage gefertigt und besitzt eine rechteckige Außenkontur. Ferner besitzt die Abdeckplatte 13 eine rechteckige Innenöffnung. Zwischen der Außenkontur und der Innenöffnung sind insgesamt zwei vorgestanzte Rechtecke 14 ausgebildet. Die Stanzlinien sind in Fig. 3 wieder gepunktet dargestellt. Außerdem sind auf der Abdeckplatte 13 wieder Laschen 15 ausgebildet, die als Fixierelemente für das elektronische Gerät dienen. Die äußeren Abmessungen der Abdeckplatte 13 sind größer ausgebildet als die Abmessungen der Öffnung 5 auf der Oberseite 2 des Grundkörpers 1, sodass die Abdeckplatte 13 auf die Öffnung 5 gelegt werden kann. Durch Heraustrennen eines oder mehrere der Rechtecke 14 aus der Abdeckplatte 13 kann die Größe der Innenöffnung an die Größe des Bildschirms des elektronischen Gerätes angepasst werden.

Die Vorrichtung zur Halterung eines mobilen elektronischen Gerätes mit Bildschirm kann damit als Kombination aus den beiden Teilelementen Grundkörper 1 und Abdeckplatte 13 ausgebildet sein. Dadurch ist es möglich, die Vorrichtung für ein erstes mobiles elektronisches Gerät mit einem relativ großen Bildschirm zu verwenden, in dem das erste mobile elektronische Gerät direkt auf die Öffnung 5 auf der Oberseite 2 des Grundkörpers 1 gelegt wird. Zugleich ist es aber möglich, die Vorrichtung für weitere mobile elektronische Geräte mit kleineren Bildschirmen zu verwenden, indem eine entsprechend ausgestanzte Abdeckplatte 13 auf die Öffnung 5 des Grundkörpers 2 gelegt wird, sodass nur noch die im Vergleich zur Öffnung 5 des Grundkörpers 2 kleinere Innenöffnung der Abdeckplatte 13 verbleibt.

Fig. 4 zeigt einen weiteren Grundkörper 101 einer Vorrichtung zur Halterung eines mobilen elektronischen Gerätes mit Bildschirm. Der Grundkörper 101 ist hierbei im Wesentlichen entsprechend dem in Fig. 1 dargestellten Grundkörper 1 ausgebildet. Allerdings wurde auf die Laschen 11 verzichtet. Auch ist anstelle der Oberseite 2 eine Oberseite 102 vorhanden, die breiter ist als die Oberseite 2. Ferner ist eine Seitenwand 104 anstelle der Seitenwand 4 vorhanden, die ebenfalls bereiter ausgebildet ist als die Seitenwand 4.

Auf der Seitenwand 104 sind insgesamt zwei Klappen 112a und 112b vorgestanzt. Die Aussparung 106 ist im Bereich der Unterkante 107 der Seitenwand 204 ausgebildet und ist derart dimensioniert, dass zwei Halspartien von zwei verschiedenen Benutzern gleichzeitig umfasst werden können. Dies ermöglicht eine gleichzeitige Nutzung der Vorrichtung durch zwei Benutzer. Die beiden Klappen 112a und 112b sind getrennt voneinander hochklappbar, sodass jeder Benutzer individuell leicht mit seinem Kopf in das Innere des Grundkörpers 101 und wieder heraus gelangen kann.

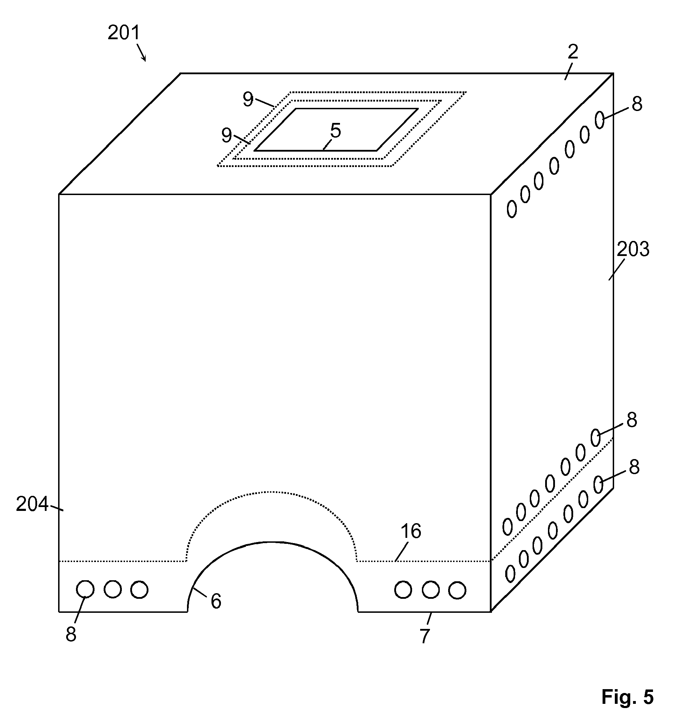

Fig. 5 zeigt einen weiteren Grundkörper 201 einer Vorrichtung zur Halterung eines mobilen elektronischen Gerätes mit Bildschirm. Der Grundkörper 201 ist hierbei im Wesentlichen entsprechend dem in Fig. 1 dargestellten Grundkörper 1 ausgebildet. Allerdings wurde auf die Laschen 10, die Laschen 11 und die Klappe 12 verzichtet. Auch ist anstelle der Seitenwand 3 eine Seitenwand 203 und anstelle der Seitenwand 4 eine Seitenwand 204 vorhanden.

Entlang der Seitenwände des Grundkörpers 201 ist eine umlaufende Kante 16 (in Fig. 5 gepunktet dargestellt) vorgestanzt. Diese vorgestanzte Kante 16 läuft im unteren Bereich der Seitenwände um den Grundkörper 201 herum und nimmt auch die Kontur der Aussparung 6 auf der Seitenwand 204 auf. Die Seitenwände 203, 204 sind mit zusätzlichen Belüftungsöffnungen 8 versehen. Die zusätzlichen Belüftungsöffnungen sind hierbei im Bereich zwischen der Unterkante der jeweiligen Seitenwand und der vorgestanzten Kante 16 angeordnet. Die vorgestanzte Kante 16 kann bei Bedarf abgetrennt oder umgeknickt werden und auf diese Weise die Höhe des Grundkörpers 201 an die Bedürfnisse des Benutzers angepasst werden.

### BEZUGSZEICHENLISTE

- 1: Grundkörper
- 2: Oberseite
- 3: Seitenwand
- 4: Seitenwand
- 5: Öffnung
- 6: Aussparung
- 7: Unterkante
- 8: Belüftungsöffnung
- 9: perforiertes Rechteck
- 10: Lasche
- 11: Lasche
- 12: Klappe
- 13: Abdeckplatte
- 14: perforiertes Rechteck
- 15: Lasche
- 16: Kante
- 101: Grundkörper
- 102: Oberseite
- 104: Seitenwand
- 106: Aussparung
- 107: Unterkante
- 112a: Klappe
- 112b: Klappe
- 201: Grundkörper
- 203: Seitenwand
- 204: Seitenwand

## Patentansprüche

1. Vorrichtung zur Halterung eines mobilen elektronischen Gerätes mit Bildschirm, aufweisend:
- einen hohlquaderförmigen Grundkörper (1, 101, 201) mit einer Oberseite (2, 102) und Seitenwänden (3, 4, 104, 203, 204);
- eine rechteckige Öffnung (5) auf der Oberseite (2, 102) des Grundkörpers (1, 101), deren Öffnungsquerschnitt auf die Bildschirmgröße des elektronischen Gerätes anpassbar ist; und
- eine Aussparung (6, 106) im Bereich der Unterkante (7, 107) einer der Seitenwände (4, 104, 204), welche derart dimensioniert ist, dass eine Halspartie eines Benutzers umfasst werden kann.

2. Vorrichtung nach Anspruch 1, wobei der Grundkörper (1, 101, 201) aus Pappe, Karton oder Kartonage besteht.

3. Vorrichtung nach einem der vorhergehenden Ansprüche, wobei der Grundkörper (1, 101, 201) zusammenfaltbar oder zusammenklappbar ausgebildet ist.

4. Vorrichtung nach einem der vorhergehenden Ansprüche, wobei der Grundkörper (1, 101, 201) Belüftungsöffnungen (8), insbesondere auf einer oder mehreren der Seitenwände ausgebildete Belüftungsöffnungen (8), aufweist.

5. Vorrichtung nach einem der vorhergehenden Ansprüche, wobei die Öffnung (5) eine Mehrzahl von ineinander liegenden perforierten oder vorgestanzten Rechtecken (9) aufweist.

6. Vorrichtung nach einem der vorhergehenden Ansprüche ferner aufweisend eine rechteckige Abdeckplatte (13), insbesondere eine aus Pappe, Karton oder Kartonage gefertigte rechteckige Abdeckplatte (13), welche eine Mehrzahl von ineinander liegenden perforierten oder vorgestanzten Rechtecken (14) aufweist.

7. Vorrichtung nach einem der vorhergehenden Ansprüche, wobei die Aussparung (106) derart dimensioniert ist, dass zwei Halspartien von zwei verschiedenen Benutzern gleichzeitig umfasst werden können.

8. Vorrichtung nach einem der vorhergehenden Ansprüche, wobei auf der Oberseite (2) des Grundkörpers (1) und/oder, falls rückbezogen auf Anspruch 6, auf der Abdeckplatte (13) Fixierelemente zur Fixierung des elektronischen Gerätes angeordnet sind.

9. Vorrichtung nach Anspruch 8, wobei die Fixierelemente als perforierte oder vorgestanzte, ausklappbare Laschen (10, 15) ausgebildet sind.

10. Vorrichtung nach einem der vorhergehenden Ansprüche wobei an der äußeren Oberfläche des Grundkörpers (1) Kabelhalterungen angeordnet sind.

11. Vorrichtung nach Anspruch 10, wobei die Kabelhalterungen als perforierte oder vorgestanzte, ausklappbare Laschen (11) ausgebildet sind.

12. Vorrichtung nach einem der vorhergehenden Ansprüche, wobei auf einer Seitenwand, insbesondere auf derjenigen Seitenwand (4, 104), welche mit der Aussparung (6, 106) versehen ist, eine Klappe (12, 112a, 112b) zum Hochklappen mindestens eines Teilbereichs der Seitenwand (4, 104) ausgebildet ist.

13. Vorrichtung nach Anspruch 12, wobei die Klappe (12, 112a, 112b) als perforierte oder vorgestanzte, hochklappbare Klappe (12, 112a, 112b) ausgebildet ist.

14. Vorrichtung nach einem der vorhergehenden Ansprüche, wobei die Seitenwände (203, 204) in ihrem unteren Bereich eine umlaufende perforierte oder vorgestanzte Kante (16) aufweisen.
